# EUROPÄISCHE PATENTSCHRIFT

(11) **EP 4 166 432 B1**
(45) Veröffentlichungstag und Bekanntmachung des Hinweises auf die Patenterteilung: **22.05.2024**
(21) Anmeldenummer: 21202245.3
(22) Anmeldetag: 12.10.2021
(51) Int. Cl.: B62D 53/08

(54) **SATTELAUFLIEGER**
SEMITRAILER
SEMI-REMORQUE

(43) Veröffentlichungstag der Anmeldung: 19.04.2023
(73) Patentinhaber: Wilhelm Schwarzmüller GmbH, 4785 Freinberg (AT)
(72) Erfinder: Schöndorfer, Christoph, 4785 Freinberg (AT); Schwendinger, Martin, 4785 Freinberg (AT)
(74) Vertreter: SONN Patentanwälte GmbH & Co KG

(56) Entgegenhaltungen:
- US-A- 3 198 548
- US-A- 3 208 770
- US-A- 3 399 907

## Beschreibung

Die Erfindung betrifft einen Sattelauflieger zum Ankuppeln an eine Zugmaschine, aufweisend:
ein Kupplungselement, insbesondere einen Königszapfen, zur Verbindung mit einer Sattelkupplung der Zugmaschine,
einen Rahmenaufbau mit einem Boden, welcher ein Kupplungssegment, an welchem das Kupplungselement angebracht ist, und ein Hauptsegment, welches das Kupplungssegment umgibt, aufweist.

Weiters betrifft die Erfindung einen Sattelzug, aufweisend:
eine Zugmaschine mit einer Sattelkupplung,
einen Sattelauflieger mit einem Kupplungselement, insbesondere mit einem Königszapfen, welches mit der Sattelkupplung der Zugmaschine verbindbar ist.

Schließlich betrifft die Erfindung ein Verfahren zum Überführen eines Sattelaufliegers zwischen einem Fahrbetrieb und einem Be- und Entladebetrieb.

Sattelzüge sind Transportgespanne, welche aus einer Sattelzugmaschine und einem Sattelauflieger bestehen. Beispiele für Sattelzüge sind in den DE 10205610 C5, EP 2 138 333 A1 und EP 0 861 768 B1 beschrieben. Der Stand der Technik wird weiters durch US 3,399,907 A1, US 3,208,770 A1 und US 3,198,548 A1 illustriert.

Im Stand der Technik gibt es vielfältige Bestrebungen, die mögliche Zuladung sowohl hinsichtlich des Gewichts als auch des Volumens optimal zu nutzen. Neben den wirtschaftlichen Aspekten kommen zunehmend auch ökologische Faktoren ins Spiel.

Vor diesem Hintergrund wurden sogenannte Megatrailer entwickelt, welche, im Unterschied zu Standard-Sattelaufliegern, eine lichte Ladehöhe von ca. 3 Metern aufweisen (siehe EP 2 990 306 B1). Um dieses Ziel zu erreichen, muss die Rahmenhalshöhe, d.h. die Höhe des Fahrzeugrahmens im Bereich des Königszapfens, reduziert werden. Bei dem Stand der Technik wird dies dadurch erreicht, dass ein Fahrzeugrahmen mit einem Frontmodul und einem Heckbereich eingesetzt wird, welcher sich vorne in vertikaler Richtung verjüngt. Somit ist das Frontmodul dünner als der Heckbereich. Das birgt jedoch Stabilitätsprobleme, welche nur durch Verstärkungen behoben werden können. So wird bei dem EP 2 990 306 B1 das Frontmodul im Bereich des Königszapfen als massive Platte ausgestaltet, die kreisförmig um den Königszapfen angeordnet ist. Von dieser kreisförmigen Platte erstrecken sich strahlenförmig weitere Verstärkungen weg. Dazwischen sind Füllelemente eingeschweißt. Nachteilig ist jedoch die aufwendige Konstruktion, welche zudem mit einem hohen Gewicht einhergeht.

Weiters wurden sogenannte Jumbo-Trailer vorgeschlagen, bei denen eine Standard-Zugmaschine verwendet werden kann, jedoch ein Knick in der Ladefläche ausgebildet wird. Dadurch wird nachteiligerweise die Be- und Entladung beeinträchtigt. Zudem wird das Ladevolumen im Überlappungsbereich zwischen Auflieger und Zugmaschine reduziert.

Somit wurden bislang einerseits Lösungen abseits von standardisierten Fahrzeugen vorgeschlagen, wie zum Beispiel Zugfahrzeuge mit besonders niedriger Aufsattelhöhe, die aber einerseits kostenintensiv sind und andererseits keinen flexiblen Einsatz der Auflieger beim Wechsel des Zugfahrzeugs gewährleisten können.

Ein weiterer Lösungsansatz ist es, die Höhe des Rahmens des Aufliegers durch geeignete Konstruktion oder alternative Materialien zu reduzieren und den hier gewonnenen Höhenunterschied der Ladehöhe zufließen zu lassen. Hier ist jedoch zu berücksichtigen, dass der Einsatz von neuen Materialen in der Regel zu Lasten der Herstellungskosten geht und auch Wartung und Reparatur erschwert werden. Daher ist es vielfach wünschenswert, möglichst bei etablierten Materialien und Herstellungsprozessen zu bleiben.

Demnach besteht die Aufgabe der vorliegenden Erfindung darin, zumindest einzelne Nachteile des Standes der Technik zu lindern bzw. zu beheben. Die Erfindung setzt sich bevorzugt zum Ziel, einen konstruktiv einfachen Sattelauflieger und einen damit ausgestatteten Sattelzug zu schaffen, mit welchen Ladevolumen und - gewicht optimiert werden, ohne das Be- und Entladen wesentlich zu beeinträchtigen.

Diese Aufgabe wird mit einem Sattelauflieger nach Anspruch 1, mit einem Sattelzug nach Anspruch 11 und mit einem Verfahren nach Anspruch 12 gelöst. Bevorzugte Ausführungsformen sind in den abhängigen Ansprüchen angegeben.

Erfindungsgemäß ist das Hauptsegment des Bodens relativ zu dem Kupplungssegment zwischen einer abgesenkten Fahrstellung, in der das Kupplungssegment gegenüber dem Hauptsegment nach oben vorsteht, und einer angehobenen Be- und Entladestellung höhenverstellbar.

Für das Beladen oder Entladen des Sattelaufliegers kann das Hauptsegment des Bodens samt Wand- und Dachaufbau des Rahmenaufbaus gegenüber dem Kupplungssegment angehoben werden, an welchem unterseitig das Kupplungselement für die Verbindung mit der Sattelkupplung befestigt ist. In der angehobenen Be- und Entladestellung kann eine durchgängige Ladefläche an der Oberseite des Bodens geschaffen werden, welche eine ungehinderte Be- bzw. Entladung des Laderaums ermöglicht. Beim Be- und Entladen schadet es typischerweise nicht, wenn die Außenhöhe des Aufliegers erhöht ist. Für den Fahrbetrieb kann das Hauptsegment des Bodens samt Wand- und Dachaufbau des Rahmenaufbaus gegenüber dem Kupplungssegment abgesenkt werden, wodurch insbesondere die maximale Außenhöhe des Sattelaufliegers eingehalten werden kann. In der Fahrstellung steht das Kupplungssegment gegenüber dem Hauptsegment nach oben vor. Durch geeignete Positionierung des Transportguts auf dem Boden wird der nutzbare Laderaum jedoch nicht bzw. nur unwesentlich beeinträchtigt. Da das Kupplungssegment in der Fahrstellung in den Laderaum hineinragt, ist es nicht zwingend erforderlich, den Boden im Bereich des Kupplungssegments durchgängig so massiv wie beim Stand der Technik auszuführen. Vorteilhafterweise kann so ein ungünstiges Mehrgewicht bei einer geringen Rahmenhalshöhe reduziert oder vermieden werden.

Die erfindungsgemäße Ausführung des Sattelaufliegers eignet sich insbesondere für den Transport von Transportboxen, wie ISO-genormten Gitterboxen. Mit der Erfindung kann der Umstand genutzt werden, dass bei der vorgesehenen Beladung des Sattelaufliegers mit ISO-Gitterboxen diese stets an der gleichen Position platziert werden und die Füße der ISO-Gitterboxen Standardabmessungen haben und stets an der gleichen Stelle am Boden des Aufliegers stehen. Zudem ist der Bereich zwischen den Füßen, der typischerweise für die Zinken von Beladungssystemen wie Gabelstaplern benötigt wird, definiert und frei. Im Fahrbetrieb kann dieser Freiraum dazu genutzt werden, die vorstehenden Teile des Kupplungssegments des Bodens aufzunehmen.

Bei einer bevorzugten Ausführungsform weist das Kupplungssegment eine größere Stärke, definiert als maximale Erstreckung des Kupplungssegments in Höhenrichtung, d.h.in vertikaler Richtung, als das Hauptsegment auf. Dadurch kann eine steife Ausführung erzielt werden, welche beim Stand der Technik vielfach nur durch eine massive Metallplatte im Bereich des Königszapfens erreicht werden konnte. Das Kupplungssegment mit der größeren Stärke kann hingegen in der Fahrstellung in den Laderaum vorstehen und deshalb mit geringerem Gewichteinsatz ausgesteift werden.

Bei einer bevorzugten Ausführungsform weist das Kupplungssegment einen Kupplungssegment-Rahmen mit zumindest einem Kupplungssegment-Längsträger und/oder zumindest einem Kupplungssegment-Querträger auf, wobei der Kupplungssegment-Längs- und/oder Querträger bevorzugt jeweils durch ein Formrohr gebildet ist. Bevorzugt sind zwei insbesondere in Längs- bzw. Fahrtrichtung des Sattelaufliegers erstreckte Kupplungssegment-Längsträger vorgesehen, welche vorzugsweise die Längsseiten des Kupplungssegment-Rahmens bilden. Der Kupplungssegment-Querträger erstreckt sich bevorzugt quer, insbesondere senkrecht, zur Längs- bzw. Fahrtrichtung zwischen den zwei Kupplungssegment-Längsträgern. Diese Ausführung des Kupplungssegments zeichnet sich durch ein besonders geringes Gewicht aus. Da das Kupplungssegment in der abgesenkten Fahrstellung in den Laderaum vorsteht, kann die Stärke des Kupplungssegments, hier also insbesondere die maximale Erstreckung der Längsträger in vertikaler Richtung, größer als beim Stand der Technik, zum Beispiel gemäß EP 2 990 306 B1, sein, so dass die Ausführung des Kupplungssegments als Kupplungssegment-Rahmen, insbesondere Kupplungssegment-Leiterrahmen, ein geringeres Gewicht als beispielsweise eine massive Platte aufweisen kann.

Um eine im Wesentlichen plane Ladefläche an der Oberseite des Kupplungssegments zu erzielen, kann das Kupplungssegment zumindest ein Kupplungssegment-Füllpaneel, beispielsweise aus Holz, aufweisen, welches bevorzugt auf dem zumindest einen Kupplungssegment-Querträger, vorzugsweise auf zwei Kupplungssegment-Querträgern, zwischen zwei Kupplungssegment-Längsträgern angeordnet ist. Bei dieser Ausführung wird daher der Abschnitt der Ladefläche entlang des Kupplungssegments durch die Oberseiten der Kupplungssegment-Längsträger und des zumindest einen Füllpaneels gebildet.

Bei einer bevorzugten Ausführungsform weist das Hauptsegment einen Frontbereich, welcher das Kupplungssegment umgibt, zur Anordnung im Überlappungsbereich mit der Zugmaschine und einen Heckbereich auf, wobei der Frontbereich eine geringere Stärke, definiert als maximale Erstreckung in Höhenrichtung bzw. in vertikaler Richtung, als der Heckbereich aufweist. Dadurch wird die Rahmenhalshöhe reduziert. Beispielsweise kann die Stärke des Frontbereichs weniger als 55 Millimeter (mm), vorzugsweise weniger als 40 mm, insbesondere weniger als 35 mm, etwa im Wesentlichen 30 mm, betragen. Somit weist das Hauptsegment eine mit Megatrailern, vgl. EP 2 990 306 B1, vergleichbare Ausführung auf. Durch das Kupplungssegment können jedoch die beim Stand der Technik mitunter auftretenden Stabilitätsprobleme vermieden werden. Dafür kann das Kupplungssegment eine Stärke, d.h. maximale Erstreckung in Höhenrichtung, von mehr als 65 mm, vorzugsweise mehr als 100 mm, insbesondere mehr als 120 mm, beispielsweise von 130 mm bis 140 mm, aufweisen. Bevorzugt weisen zwei Kupplungssegment-Längsträger des Kupplungssegment-Rahmens diese Stärke auf. Andere Teile des Kupplungssegments, insbesondere ein Kupplungssegment-Querträger, können eine geringere Erstreckung in Höhenrichtung aufweisen.

Bei einer bevorzugten Ausführungsform weist das Hauptsegment einen Hauptsegment-Rahmen mit zumindest einem, insbesondere zwei Hauptsegment-Längsträgern, und/oder zumindest einem, insbesondere mehreren Hauptsegment-Querträgern auf. In Verbindung mit einer geringen Stärke des Hauptsegments im Bereich des Kupplungselements kann der Vorteil erzielt werden, dass Deformationen oder gar Brüche der Hauptsegment-Längs- und/oder Querträger zuverlässig vermieden werden können.

Um eine im Wesentlichen plane Ladefläche zu erzielen, kann das Hauptsegment zumindest ein Hauptsegment-Füllpaneel, beispielsweise aus Holz, aufweisen, wobei das zumindest eine Hauptsegment-Füllpaneel bevorzugt auf zumindest zwei Hauptsegment-Querträgern zwischen zwei Hauptsegment-Längsträgern angeordnet ist. Die Oberseite des Hauptsegment-Füllpaneels kann im Wesentlichen bündig mit der Oberseite der Hauptsegment-Längsträger angeordnet sein. Bei dieser Ausführung wird die Ladefläche abschnittsweise durch die Hauptsegment-Längsträger und das Hauptsegment-Füllpaneel gebildet.

Bei einer besonders bevorzugten Ausführungsform erstreckt sich das Hauptsegment, insbesondere ein Hauptsegment-Füllpaneel, zwischen zwei Kupplungssegment-Längsträgern entlang des Kupplungssegments. In der Fahrstellung stehen bevorzugt zwei Kupplungssegment-Längsträger über das Hauptsegment nach oben vor. Ein Kupplungssegment-Querträger kann unterhalb des Hauptsegments, insbesondere des Hauptsegment-Füllpaneels, angeordnet sein. Bei dieser Ausführung kann daher das Hauptsegment zwei Aussparungen aufweisen, durch welche die Kupplungssegment-Längsträger in der Fahrstellung vorstehen. In der Be- und Entladestellung kann die Ladefläche im Bereich des Kupplungssegments einerseits durch die Oberseiten der Kupplungssegment-Längsträger und andererseits durch den entlang des Kupplungssegments erstreckten Abschnitt des Hauptsegments, insbesondere des Hauptsegment-Füllpaneels, gebildet sein.

In einer bevorzugten Ausführung schließt das Hauptsegment des Bodens das Kupplungssegment (in Richtung senkrecht zur Haupterstreckungsebene des Hauptsegments gesehen) allseitig ein. Bevorzugt sind die Ränder des Hauptsegments mit dem Wand- und Dachaufbau des Rahmenaufbaus verbunden, so dass eine Absenkung des Hauptsegments eine entsprechende Absenkung des Wand- und Dachaufbaus bewirkt.

Das Kupplungssegment des Bodens kann beispielsweise in Draufsicht (d.h. senkrecht zur Haupterstreckungsebene des Kupplungssegments) rechteckig sein. Das Hauptsegment und das Kupplungssegment können gemeinsam an der Oberseite die gesamte Ladefläche ausbilden. Bevorzugt weist das Hauptsegment eine um ein Mehrfaches, insbesondere um ein Vielfaches, beispielsweise um mindestens das Zehnfache oder mindestens um das Zwanzigfache, größere Ausdehnung in der Haupterstreckungsebene als das Kupplungssegment auf. Das Kupplungssegment ist im Überlappungsbereich mit der Zugmaschine angeordnet.

Der Wand- und Dachaufbau begrenzt den Laderaum seitlich und oben. Je nach Ausführung kann der Wand- und Dachaufbau des Rahmenaufbaus eine Rück- und/oder eine Stirnwand und/oder eine Dachwand aufweisen. An den (senkrechten) Seiten kann der Rahmenaufbau mit Seitenwänden und/oder Seitenplanen ("Curtainsider") ausgebildet sein.

Bevorzugt weist der Rahmenaufbau in der abgesenkten Fahrstellung eine lichte Ladehöhe von der Oberseite des Hauptsegments des Bodens bis zur Unterseite des Dachs von zumindest 2,95 Meter, insbesondere von zumindest 3 Meter, auf. Hingegen ist die lichte Ladehöhe im Bereich des Kupplungssegments um das Ausmaß der Absenkung des Kupplungssegments in der Fahrstellung reduziert. Die Außenhöhe des Aufliegers beträgt in der abgesenkten Fahrstellung bevorzugt weniger als 4 Meter.

Um das Be- und Entladen des Sattelaufliegers zu erleichtern, ist das Kupplungssegment des Bodens in der Be- und Entladestellung oberseitig im Wesentlichen bündig mit dem Hauptsegment des Bodens angeordnet. Bei dieser Ausführung bilden die Oberseiten des Kupplungs- und des Hauptsegments des Bodens in der Be- und Entladestellung eine im Wesentlichen ebene Ladefläche aus. Besonders vorteilhaft ist es, dass ein Beladefahrzeug, insbesondere ein Gabelstapler, ungehindert auf der Ladefläche bewegt werden kann. Befindet sich eine Transportbox, beispielsweise eine Gitterbox, im Bereich des Kupplungselements, kann das Lastaufnahmemittel des Beladefahrzeugs in den Freiraum zwischen den Füßen der Transportbox eingeführt werden, um die Transportbox anzuheben, zu bewegen und an anderer Stelle abzustellen.

In der abgesenkten Fahrstellung ist die Unterseite des Hauptsegments bevorzugt im Wesentlichen bündig mit der Unterseite des Kupplungssegments angeordnet. Dadurch wird die Beweglichkeit des Sattelaufliegers relativ zur Zugmaschine gewährleistet.

Wenn das Hauptsegment als Hauptsegment-Rahmen und/oder das Kupplungssegment als Kupplungssegment-Rahmen ausgeführt ist, wie oben beschrieben, dann bezieht sich die Unterseite des Hauptsegments auf die Unterseite der Hauptsegment-Längsträger und die Unterseite des Kupplungssegments auf die Unterseite der Kupplungssegment-Längsträger. Entsprechendes gilt für die Oberseiten des Haupt- und Kupplungssegments. Die Längsträger des Kupplungs- und/oder Hauptsegments erstrecken sich bevorzugt in Längsrichtung des Sattelaufliegers (d.h. in Fahrtrichtung bei Geradeausfahrt); die Querträger bevorzugt im Wesentlichen senkrecht dazu.

Um den Innenraum des Sattelaufliegers zu maximieren, ohne die vorgeschriebene Außen- bzw. Gesamthöhe im Fahrbetrieb zu überschreiten, ist das Hauptsegment des Bodens in der abgesenkten Fahrstellung bevorzugt um zumindest 3 cm, insbesondere um zumindest 4 cm, besonders bevorzugt von 5 bis 10 cm relativ zu dem Kupplungssegment abgesenkt. Vorteilhafterweise kann so insbesondere der Freiraum von Gitterboxen genutzt werden.

Bei einer bevorzugten Ausführungsform sind ein erster Anschlag zur Begrenzung der Höhenverstellung des Hauptsegments relativ zum Kupplungssegment nach oben und ein zweiter Anschlag zur Begrenzung der Höhenverstellung des Hauptsegments relativ zum Kupplungssegment nach unten vorgesehen.

Zur Kraftunterstützung der Höhenverstellung zwischen der abgesenkten Fahr- und der angehobenen Be- und Entladestellung ist bevorzugt eine Hubeinrichtung zur Höhenverstellung des Hauptsegments des Bodens relativ zu dem Kupplungssegment des Bodens vorgesehen.

Bevorzugt weist die Hubeinrichtung ein am Sattelauflieger verbautes Hubelement auf. Zusätzlich oder alternativ kann die Hubeinrichtung ein externes Hubelement, beispielsweise eine Hubstütze, aufweisen, welches temporär mit dem Sattelauflieger, insbesondere weiter vorne als die vorderste Achse des Sattelaufliegers, verbunden ist, um die Höhenverstellung vorzusehen. Bei diesen Ausführungen kann die Hubeinrichtung dazu eingerichtet sein, das Hauptsegment mit dem Wand- und Dachaufbau relativ zum Kupplungssegment (bzw. zur damit verbundenen Zugmaschine) anzuheben bzw. abzusenken.

Weiters kann die Hubeinrichtung ein an der Zugmaschine verbautes Hubelement aufweisen. Bei dieser Ausführung kann das Hauptsegment mit dem Wand- und Dachaufbau in der Höhe fixiert sein, während die Hubeinrichtung an der Zugmaschine das Kupplungssegment relativ zum Hauptsegment anhebt bzw. absenkt.

Diese Ausführungsformen können auch miteinander kombiniert werden. Somit kann auch je ein Hubelement an der Zugmaschine und am Sattelauflieger vorgesehen sein, so dass einerseits das Kupplungssegment und andererseits das Hauptsegment mit dem Wand- und Dachaufbau des Sattelaufliegers in der Höhe verstellbar ist.

Bei einer Ausführungsvariante weist die Hubeinrichtung einen Achshöhenantrieb für eine (Rad-)Achse des Sattelaufliegers , insbesondere in Verbindung mit einer Hubstütze, auf. Der Sattelauflieger weist zumindest eine Achse, bevorzugt zumindest zwei Achsen, auf. Wie im Stand der Technik an sich bereits bekannt, ist bei dieser Ausführungsvariante zumindest eine Achse mit einem Achshöhenantrieb verbunden. Dieser bereits vorhandene Achshöhenantrieb kann nun zudem als Teil der Hubeinrichtung genutzt werden, welches über den Rahmenaufbau auf der Achse abgestützt ist.

Bevorzugt weist die Hubeinrichtung einen Hydraulik- oder Pneumatikantrieb auf. Der Pneumatikantrieb kann beispielsweise ein Pneumatikbalg aufweisen, welches im Stand der Technik bereits für den Achshöhenantrieb verwendet wird (vgl. z.B. EP 2 138 333 A1) .

Weiters ist es bevorzugt, wenn eine Führung für die Relativbewegung des Hauptsegments relativ zum Kupplungssegment des Bodens vorgesehen ist. Bei einer bevorzugten Ausführung weist die Führung eine Keilführung mit einer zur Haupterstreckungsebene des Hauptsegments geneigten Keilfläche auf.

Bei einer bevorzugten Ausführung ist die Hubeinrichtung so mit der Keilführung verbunden, dass das Hauptsegment durch Betätigung der Hubeinrichtung entlang der Keilfläche relativ zum Kupplungssegment beweglich ist. Auf diese Weise wird ein Keilhub erzielt. Bei einer ersten Variante ist der Keilhub zur Umwandlung einer Vor- bzw. Rückwärtsbewegung der Zugmaschine in die Höhenverstellung des Hauptsegments relativ zu dem Kupplungssegment eingerichtet. Alternativ kann der Keilhub einen Aktor an dem Sattelauflieger aufweisen, welcher die Bewegung des Hauptsegments relativ zum Kupplungssegment entlang der Keilfläche bewirkt.

Um den Sattelauflieger in der jeweiligen Betriebsstellung zu sichern, ist bei einer bevorzugten Ausführungsform eine Verriegelungseinrichtung zur Verriegelung des Hauptsegments des Bodens in der abgesenkten Fahrstellung und/oder in der angehobenen Be- und Entladestellung vorgesehen.

Zur Fixierung des Bodens in der gewünschten Betriebsposition weist die Verriegelungseinrichtung bei einer bevorzugten Ausführungsform zumindest einen Verriegelungsbolzen und eine Verriegelungsöffnung auf. Diese Ausführung ist besonders günstig, weil mit dem Verriegelungsbolzen eine Versteifung des Bodens erzielt wird. Dafür ist es zudem vorteilhaft, wenn der Verriegelungsbolzen im Wesentlichen parallel zur Haupterstreckungsebene des Hauptsegments, insbesondere in Querrichtung des Sattelaufliegers (d.h. senkrecht zur Fahrtrichtung), angeordnet ist.

Bei einer bevorzugten Ausführungsform sind zumindest zwei Verriegelungsöffnungen zur Verriegelung in der Fahr- und in der Be- bzw. Entladestellung vorgesehen. Besonders stabil und zuverlässig ist eine Ausführung, bei welcher das Kupplungssegment zwei Verriegelungsöffnungen in unterschiedlichen Höhenpositionen (d.h. übereinander) aufweist, in welche ein Verriegelungsbolzen am Hauptsegment einfahren kann. In der Fahrstellung kann der Verriegelungsbolzen mit der unteren der zwei Verriegelungsöffnungen und in der Be- bzw. Entladestellung mit der oberen der zwei Verriegelungsöffnungen verriegelt sein.

Für eine einfache Betätigung kann die Verriegelungseinrichtung einen Verriegelungsantrieb, insbesondere einen pneumatischen oder hydraulischen Verriegelungsantrieb, aufweisen, mit welchem der Verriegelungsbolzen zwischen einer verriegelten Stellung und einer Freigabestellung überführbar ist.

Bei einer bevorzugten Anwendung des Sattelaufliegers ist eine Transportbox, insbesondere eine Gitterbox, mit einem unterseitigen Freiraum auf dem Boden abgestellt, wobei das Kupplungssegment des Bodens in der abgesenkten Fahrstellung in dem Freiraum der Transportbox angeordnet ist. Bevorzugt bewirkt das Kupplungssegment in der abgesenkten Fahrstellung eine Sicherung der Transportbox gegen Bewegungen in Richtung parallel zur Haupterstreckungsebene des Hauptsegments des Bodens.

Besonders bevorzugt sind drei Transportboxen übereinander angeordnet, wobei das Kupplungssegment des Bodens in der abgesenkten Fahrstellung in dem Freiraum der untersten Transportbox angeordnet ist.

Mit einem Sattelauflieger in einer der oben beschriebenen Ausführungsvarianten kann folgendes Verfahren zum Überführen des Sattelaufliegers zwischen einem Fahrbetrieb und einem Be- und Entladebetrieb, durchgeführt werden:
Anordnen des Hauptsegments des Bodens in der abgesenkten Fahrstellung für den Fahrbetrieb, und
Anheben des Hauptsegments des Bodens relativ zu dem Kupplungssegment in die angehobene Be- und Entladestellung für den Be- und Entladebetrieb.

Die Erfindung wird nachstehend anhand eines bevorzugten Ausführungsbeispiels, auf das sie nicht beschränkt sein soll, weiter erläutert.
Fig. 1 zeigt einen erfindungsgemäßen Sattelzug bestehend aus einer Zugmaschine und einem Sattelauflieger, dessen Boden in einer planen Be- und Entladestellung angeordnet ist.
Fig. 2 zeigt den Sattelzug der Fig. 1, wobei ein Hauptsegment des Bodens gegenüber einem Kupplungssegment, an dem der Königszapfen befestigt ist, in eine Fahrstellung abgesenkt ist.
Fig. 3 zeigt einen Längsschnitt des Sattelaufliegers im Bereich des Königszapfens in der Be- und Entladestellung gemäß Fig. 1.
Fig. 4 zeigt einen Längsschnitt des Sattelaufliegers im Bereich des Königszapfens in der Fahrstellung gemäß Fig. 2.
Fig. 5 zeigt im Querschnitt eine weitere Ausführungsform des Sattelaufliegers, bei welcher das Kupplungssegment einen Rahmen mit zwei Längsträgern aufweist, welche in der gezeigten Fahrstellung durch Aussparungen des Hauptsegments ragen.

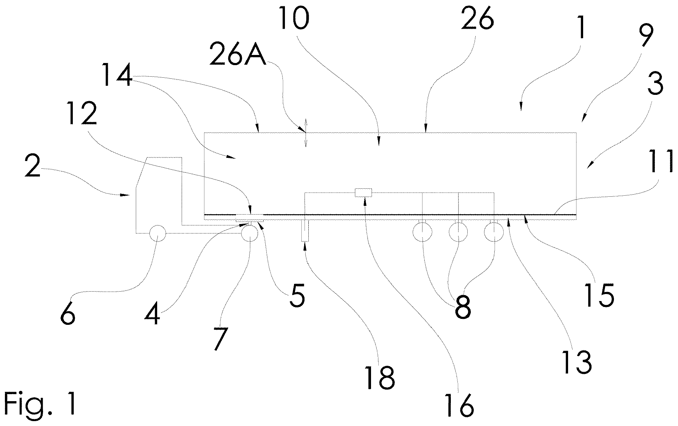

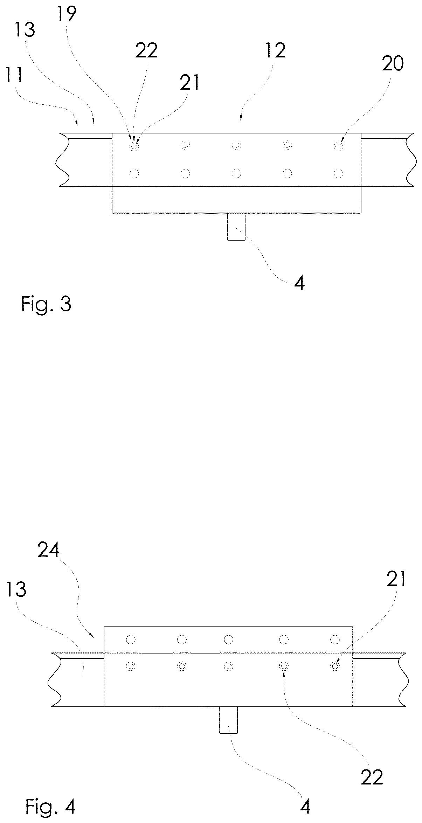

Fig. 1 zeigt einen Sattelzug 1, auch Sattelkraftfahrzeug bzw. Sattelmotorfahrzeug genannt, mit einer Sattelzugmaschine, nachstehend kurz Zugmaschine 2, und einem Sattelauflieger 3, welcher über ein Kupplungselement, hier ein (in Fig. 3 schematisch ersichtlicher) Königszapfen 4, mit einer Sattelkupplung 5 der Zugmaschine 2 gekuppelt ist. Die Zugmaschine 2 hat zumindest eine Vorderachse 6 und eine Hinterachse 7. Der Sattelauflieger 3 hat keine Vorderachse, jedoch zumindest eine, im gezeigten Beispiel drei, Auflieger-Hinterachsen 8.

Weiters hat der Sattelauflieger 3 einen quaderförmigen Rahmenaufbau 9, welcher im Inneren einen Transportraum 10 einschließt. Der Rahmenaufbau 9 weist unterseitig einen Boden 11 mit einem Kupplungssegment 12, an welchem der Königszapfen 4 angebracht ist, und ein Hauptsegment 13 auf, welches das Kupplungssegment 12 (in Draufsicht gesehen) innen einschließt.

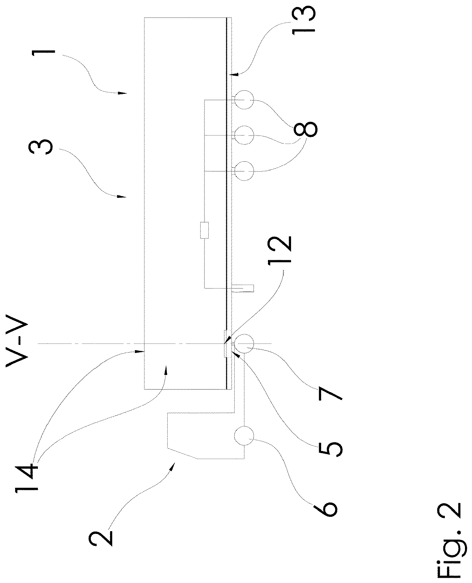

Das Hauptsegment 13 bildet mehr als die halbe Ausdehnung der Ladefläche aus. Das Hauptsegment 13 des Bodens 11 ist gemeinsam mit einem Wand- und Dachaufbau 14 des Rahmenaufbaus 9 gegenüber dem Kupplungssegment 12 zumindest in der Höhe, d.h. im Wesentlichen in Richtung senkrecht zur Haupterstreckungsebene des Hauptsegments 13, verstellbar. Dadurch kann das Hauptsegment 13 von einer in Fig. 1 und Fig. 3 dargestellten Belade- und Entladestellung in eine in Fig. 2 und Fig. 4 dargestellte Fahrstellung abgesenkt (und umgekehrt wieder von der Fahrstellung in die Be- und Entladestellung angehoben) werden.

In der Be- und Entladestellung ist die Oberseite des Hauptsegments 13 bündig mit der Oberseite des Kupplungssegments 12 des Bodens 11 angeordnet, so dass eine im Wesentlichen ebene Ladefläche 15 für Transportgut an der Oberseite geschaffen wird. In der abgesenkten Fahrstellung ist das Hauptsegment 13 des Bodens 11 und damit auch der Wand- und Dachaufbau 14 um bis zu 10 Zentimeter (cm) relativ zu dem Kupplungssegment 12 abgesenkt. Die Unterseite des Hauptsegments 13 ist dabei im Wesentlichen bündig mit der Unterseite des Kupplungssegments 12 angeordnet.

Wie in Fig. 1 schematisch angedeutet wird, ist eine Hubeinrichtung 16 zur Höhenverstellung des Hauptsegments 13 des Bodens 11 relativ zu dem Kupplungssegment 12 des Bodens 11 vorgesehen. Bei einer Ausführungsvariante wird das Hauptsegment 13 in der Höhe verstellt. Das Kupplungssegment 12 kann dabei in der Höhe fixiert mit der Sattelkupplung 5 verbunden sein. In der gezeigten Ausführung kann die Hubeinrichtung 16 zum Anheben und Absenken des Hauptsegments 13 des Bodens 11 zusammen mit dem Dach- und Wandaufbau 14 als Hubelement einerseits einen Achshöhenantrieb, beispielsweise mit Pneumatik-Bälgen, aufweisen, mit welchem die Auflieger-(Hinter-)Achsen 8 gegenüber dem Wand- und Dachaufbau 14 höhenverstellbar sind. Als weiteres Hubelement kann die Hubeinrichtung zudem eine Hubstütze 18 weiter vorne am Sattelauflieger 3 aufweisen.

Weiters sind ein erster und ein zweiter Anschlag (nicht gezeigt) vorgesehen, welche die Höhenverstellung nach oben und unten begrenzen. Mit einer Führung (nicht gezeigt) wird die Relativbewegung zwischen Kupplungssegment 12 und Hauptsegment 13 geführt.

Wie aus den Vertikalschnitten (entlang der Längsrichtung des Sattelaufliegers) gemäß Fig. 3 und Fig. 4 schematisch ersichtlich, kann eine schematisch ersichtliche Verriegelungseinrichtung 19 vorgesehen sein, welche dazu eingerichtet ist, das Hauptsegment 13 in der abgesenkten Fahrstellung und in der angehobenen Be- und Entladestellung relativ zum Kupplungssegment 12 in der Höhe zu fixieren. Im gezeigten Beispiel weist die Verriegelungseinrichtung 19 eine Bolzenverbindung 20 mit am Hauptsegment 13 gelagerten Verriegelungsbolzen 21 und Verriegelungsöffnungen 22 am Kupplungssegment 12 auf. Wie aus Fig. 3 und Fig. 4 ersichtlich, können zwei Serien von Bolzenöffnungen 22 auf unterschiedlichen Höhenpositionen vorgesehen sein. In der Be- und Entladestellung sind die Verriegelungsbolzen 21 mit den oberen Verriegelungsöffnungen 22 (vgl. Fig. 3), in der Fahrstellung mit den unteren Verriegelungsöffnungen 22 verbunden (vgl. Fig. 4).

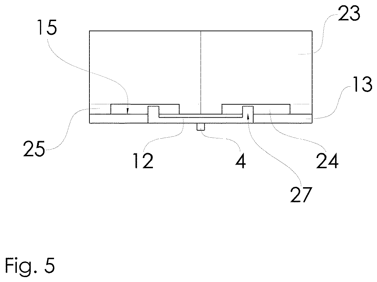

Da das Kupplungssegment 12 eine größere Stärke, d.h. maximale Erstreckung in vertikaler Richtung, als das Hauptsegment 13 hat, kann eine besonders gewichtssparende Ausführung des Bodens 11 vorgesehen werden. Der Boden 11 ist in den Zeichnungen nur schematisch eingezeichnet. In der Ausführungsform der Fig. 5 kann das Hauptsegment 13 einen Hauptsegment-Rahmen mit Hauptsegment-Längs- und Querträgern (nicht gezeigt) aufweisen. Weiters kann das Kupplungssegment 12 einen Kupplungssegment-Rahmen mit (schematisch ersichtlichen) Kupplungssegment-Längsträgern 27 in Längsrichtung des Sattelaufliegers und zumindest einem quer dazu verlaufenden Kupplungssegment-Querträger aufweisen. In der (gezeigten) Fahrstellung sind die Unterseiten der Kupplungssegment-Längsträger 27 bündig mit der Unterseite des Hauptsegments 13 angeordnet. Die Oberseiten der Kupplungssegment-Längsträger 27 stehen über die Oberseite des Hauptsegments 13 hinaus. Darüber hinaus kann sich das Hauptsegment 13, insbesondere ein Füllpaneel des Hauptsegment-Rahmens, über die ganze Länge des Kupplungssegments 12 zwischen den Kupplungssegment-Längsträgern 27 erstrecken. In der gezeigten Fahrstellung kann der Kupplungssegment-Querträger unterseitig am Füllelement des Hauptsegment-Rahmens anliegen. In der (nicht gezeigten) Be- und Entladestellung ist der Kupplungssegment-Querträger gegenüber dem darüber verlaufenden Abschnitt des Hauptsegments 13 nach unten verlagert. Die Ladefläche im Bereich des Kupplungssegments 12 wird in der Be- und Entladestellung durch die Oberseiten der Kupplungssegment-Längsträger 27 und die Oberseite des Abschnitts des Hauptsegments 13 zwischen den Kupplungssegment-Längsträgern 27 gebildet.

Wie in Fig. 5 angedeutet ist, können auf der Ladefläche 15 insbesondere Transportboxen 23, zum Beispiel Gitterboxen, transportiert werden.

Zum Beladen des Sattelaufliegers 3 wird der Boden in der Be- und Entladestellung mit durchgängiger, ebener Ladefläche 15 angeordnet. Anschließend können die Transportboxen 23 mit einem Beladefahrzeug, beispielsweise mit einem Gabelstapler, auf der Ladefläche 15 abgestellt (oder umgekehrt beim Entladen herausgenommen) werden. Zu diesem Zweck wird ein Lastaufnahmemittel, beispielsweise Hubzinken, des Beladefahrzeugs in einen Freiraum 24 zwischen Füßen 25 der Transportbox 23 eingeführt. In der Beladestellung würde der Sattelauflieger 3 jedoch die zulässige Gesamthöhe für den Fahrbetrieb überschreiten. Deshalb wird das Hauptsegment 13 des Bodens 1 samt Wand- und Dachaufbau 14 vor der Fahrt in die Fahrstellung abgesenkt. Dadurch steht das Kupplungssegment 12, in der gezeigten Ausführung nur die Kupplungssegment-Längsträger 27, gegenüber dem Hauptsegment 13 nach oben vor. Die Transportboxen 23 sind an definierten Stellen auf der Ladefläche 15 angeordnet, so dass das Kupplungssegment 12 des Bodens 11 - ohne Kollision mit den Füßen 25 - in den Freiraum 24 der Transportbox 23 hineinragt. Dadurch werden die Transportboxen 23 zugleich gegen eine Bewegung in zumindest eine Richtung parallel zur Haupterstreckungsebene des Hauptsegments 13 (d.h. in horizontaler Richtung, bezogen auf eine Neutralstellung des Sattelaufliegers 3 auf einem horizontalen Untergrund) gesichert. Beispielsweise kann die Sicherung in oder gegen Fahrtrichtung erzielt werden.

Wie in Fig. 1 mit Doppelpfeil 26A angedeutet ist, kann ein Dachbereich des Wand- und Dachaufbaus 14 als Hubdach 26 ausgebildet sein, welches in der Höhe verstellbar ist. Damit kann beispielsweise Palettenware bei abgesenktem Dach transportiert werden. Bei dieser Ausführung kann die Beladung im angehobenen Zustand des Hubdachs 26 besonders einfach durchgeführt werden.

## Patentansprüche

1. Sattelauflieger (3) zum Ankuppeln an eine Zugmaschine (2), aufweisend:
ein Kupplungselement, insbesondere einen Königszapfen (4), zur Verbindung mit einer Sattelkupplung (5) der Zugmaschine (2),
einen Rahmenaufbau (9) mit einem Boden (11), welcher ein Kupplungssegment (12), an welchem das Kupplungselement (12) angebracht ist, und ein Hauptsegment (13), welches das Kupplungssegment (12) umgibt, aufweist,
**dadurch gekennzeichnet, dass**
das Hauptsegment (13) des Bodens (11) relativ zu dem Kupplungssegment (12) zwischen einer abgesenkten Fahrstellung, in der das Kupplungssegment (12) gegenüber dem Hauptsegment (13) nach oben vorsteht, und einer angehobenen Be- und Entladestellung höhenverstellbar ist.

2. Sattelauflieger (3) nach Anspruch 1, **dadurch gekennzeichnet, dass** die Oberseite des Kupplungssegments (12) des Bodens (11) in der Be- und Entladestellung im Wesentlichen bündig mit der Oberseite des Hauptsegments (13) des Bodens (11) angeordnet ist.

3. Sattelauflieger (3) nach Anspruch 1 oder 2, **dadurch gekennzeichnet, dass** das Hauptsegment (13) des Bodens (11) in der abgesenkten Fahrstellung um zumindest 3 cm, insbesondere um zumindest 4 cm, besonders bevorzugt von 5 bis 10 cm, relativ zu dem Kupplungssegment (12) abgesenkt ist.

4. Sattelauflieger (3) nach einem der Ansprüche 1 bis 3, **dadurch gekennzeichnet, dass** das Kupplungssegment (12) eine größere Stärke als das Hauptsegment (13) aufweist.

5. Sattelauflieger (3) nach einem der Ansprüche 1 bis 4, **dadurch gekennzeichnet, dass** das Kupplungssegment (12) einen Kupplungssegment-Rahmen mit Kupplungssegment-Längs- und/oder Querträgern aufweist.

6. Sattelauflieger (3) nach einem der Ansprüche 1 bis 5, **gekennzeichnet durch**
eine Hubeinrichtung (16) zur Höhenverstellung des Hauptsegments (13) des Bodens (11) relativ zu dem Kupplungssegment (12) des Bodens (11).

7. Sattelauflieger (3) nach einem der Ansprüche 1 bis 6, **dadurch gekennzeichnet, dass** eine Verriegelungseinrichtung (19) zur Verriegelung des Hauptsegments (13) des Bodens (11) in der abgesenkten Fahrstellung und/oder in der angehobenen Be- und Entladestellung vorgesehen ist.

8. Sattelauflieger (3) nach Anspruch 7, **dadurch gekennzeichnet, dass** die Verriegelungseinrichtung (19) zumindest einen Verriegelungsbolzen (21) und zumindest eine Verriegelungsöffnung (22), vorzugsweise zwei Verriegelungsöffnungen (22) in unterschiedlichen Höhenpositionen, aufweist.

9. Sattelauflieger (3) nach einem der Ansprüche 1 bis 8, **dadurch gekennzeichnet, dass** eine Transportbox (23), insbesondere eine Gitterbox, mit einem unterseitigen Freiraum (24) auf dem Boden (11) abgestellt ist, wobei das Kupplungssegment (12) des Bodens (11) in der abgesenkten Fahrstellung in dem Freiraum (24) der Transportbox (23) angeordnet ist.

10. Sattelauflieger (3) nach einem der Ansprüche 1 bis 9, **dadurch gekennzeichnet, dass** der Rahmenaufbau (9) ein Hubdach (26) aufweist.

11. Sattelzug (1), aufweisend:
eine Zugmaschine (2) mit einer Sattelkupplung (5),
einen Sattelauflieger (3) mit einem Kupplungselement, insbesondere mit einem Königszapfen (4), welches mit der Sattelkupplung (5) der Zugmaschine (2) verbindbar ist,
**dadurch gekennzeichnet, dass**
der Sattelauflieger (3) nach einem der Ansprüche 1 bis 10 ausgebildet ist.

12. Verfahren zum Überführen eines Sattelaufliegers nach einem der Ansprüche 1 bis 10 zwischen einem Fahrbetrieb und einem Be- und Entladebetrieb, mit den Schritten:
Anordnen des Hauptsegments (13) des Bodens (11) in der abgesenkten Fahrstellung für den Fahrbetrieb, und
Anheben des Hauptsegments (13) des Bodens (11) relativ zu dem Kupplungssegment (12) in die angehobene Be- und Entladestellung für den Be- und Entladebetrieb.

## Claims

1. Semi-trailer (3) for coupling to a tractor unit (2), comprising:
a coupling element, in particular a kingpin (4), for connection to a fifth wheel coupling(5) of the tractor unit (2), a frame structure (9) with a floor (11) comprising a coupling segment (12), to which the coupling element (12) is attached, and a main segment (13) which surrounds the coupling segment (12), **characterized in that**
the main segment (13) of the floor (11) is vertically adjustable relative to the coupling segment (12) between a lowered driving position, in which the coupling segment (12) projects upwards relative to the main segment (13), and a raised loading and unloading position.

2. Semi-trailer (3) according to claim 1, **characterized in that** the upper side of the coupling segment (12) of the floor (11) is arranged essentially flush with the upper side of the main segment (13) of the floor (11) in the loading and unloading position.

3. Semi-trailer (3) according to claim 1 or 2, **characterized in that**, in the lowered driving position, the main segment (13) of the floor (11) is lowered by at least 3 cm, in particular by at least 4 cm, particularly preferably from 5 to 10 cm, relative to the coupling segment (12).

4. Semi-trailer (3) according to one of claims 1 to 3, **characterized in that** the coupling segment (12) comprises a greater thickness than the main segment (13).

5. Semi-trailer (3) according to one of claims 1 to 4, **characterized in that** the coupling segment (12) comprises a coupling segment frame with coupling segment longitudinal and/or cross members.

6. Semi-trailer (3) according to one of claims 1 to 5, **characterized by**
a lifting device (16) for adjusting the height of the main segment (13) of the floor (11) relative to the coupling segment (12) of the floor (11).

7. Semi-trailer (3) according to one of claims 1 to 6, **characterized in that** a locking device (19) is provided for locking the main segment (13) of the floor (11) in the lowered driving position and/or in the raised loading and unloading position.

8. Semi-trailer (3) according to claim 7, **characterized in that** the locking device (19) comprises at least one locking bolt (21) and at least one locking opening (22), preferably two locking openings (22) in different height positions.

9. Semi-trailer (3) according to one of claims 1 to 8, **characterized in that** a transportation box (23), in particular a mesh box, with an open space (24) on the underside is placed on the floor (11), the coupling segment (12) of the floor (11) being arranged in the lowered driving position in the open space (24) of the transportation box (23).

10. Semi-trailer (3) according to one of claims 1 to 9, **characterized in that** the frame structure (9) comprises a lifting roof (26).

11. Semi-trailer truck (1), comprising:
a tractor unit (2) with a fifth wheel coupling (5),
a semi-trailer (3) with a coupling element, in particular with a kingpin (4), which can be connected to the fifth wheel coupling (5) of the tractor unit (2), **characterized in that** the semi-trailer (3) is designed according to one of claims 1 to 10.

12. Method for transferring a semi-trailer according to one of claims 1 to 10 between a driving operation and a loading and unloading operation, comprising the steps of:
arranging the main segment (13) of the floor (11) in the lowered driving position for the driving operation, and
raising the main segment (13) of the floor (11) relative to the coupling segment (12) into the raised loading and unloading position for the loading and unloading operation.

## Revendications

1. Semi-remorque (3) pour le couplage à un véhicule tracteur (2), comprenant :
un élément de couplage, plus particulièrement un pivot d'attelage (4), pour la liaison avec une sellette d'attelage (5) du véhicule tracteur (2),
une structure de châssis (9) avec un fond (11), qui comprend un élément de couplage (12), au niveau duquel l'élément de couplage (12) est monté, et un segment principal (13), qui entoure le segment de couplage (12),
**caractérisée en ce que**
le segment principal (13) du fond (11) peut être réglé en hauteur par rapport au segment de couplage (12), entre une position de marche abaissée, dans laquelle le segment de couplage (12) dépasse vers le haut par rapport au segment principal (13), et une position de chargement et déchargement surélevée.

2. Semi-remorque (3) selon la revendication 1, **caractérisée en ce que** le côté supérieur du segment de couplage (12) du fond (11) est disposé, dans la position de chargement et de déchargement, de manière globalement alignée avec le côté supérieur du segment principal (13) du fond (11).

3. Semi-remorque (3) selon la revendication 1 ou 2, **caractérisée en ce que** le segment principal (13) du fond (11) est abaissé, dans la position de marche abaissée, d'au moins 3 cm, plus particulièrement d'au moins 4 cm, plus particulièrement de préférence de 5 à 10 cm, par rapport au segment de couplage (12).

4. Semi-remorque (3) selon l'une des revendications 1 à 3, **caractérisée en ce que** le segment de couplage (12) présente une épaisseur supérieure au segment principal (13).

5. Semi-remorque (3) selon l'une des revendications 1 à 4, **caractérisée en ce que** le segment de couplage (12) comprend un cadre de segment de couplage avec des supports longitudinaux et transversaux de segment de couplage.

6. Semi-remorque (3) selon l'une des revendications 1 à 5, **caractérisée par**
un dispositif de levage (16) pour le réglage en hauteur du segment principal (13) du fond (11) par rapport au segment de couplage (12) du fond (11).

7. Semi-remorque (3) selon l'une des revendications 1 à 6, **caractérisée en ce qu'**un dispositif de verrouillage (19) est prévu pour le verrouillage du segment principal (13) du fond (11) dans la position de marche abaissée et/ou dans la position de chargement et déchargement surélevée.

8. Semi-remorque (3) selon la revendication 7, **caractérisée en ce que** le dispositif de verrouillage (19) comprend au moins une tige de verrouillage (21) et au moins une ouverture de verrouillage (22), de préférence deux ouvertures de verrouillage (22), dans des positions différentes en hauteur.

9. Semi-remorque (3) selon l'une des revendications 1 à 8, **caractérisée en ce qu'**un caisson de transport (23), plus particulièrement un caisson à grille, est déposé, avec un espace libre (24) sur le côté inférieur, sur le fond (11), dans laquelle l'élément de couplage (12) du fond (11) est disposé, dans la position de marche abaissée, dans l'espace libre (24) du caisson de transport (23).

10. Semi-remorque (3) selon l'une des revendications 1 à 9, **caractérisée en ce que** la structure de châssis (9) comprend un toit relevable (26).

11. Véhicule à semi-remorque (1) comprenant :
un véhicule tracteur (2) avec une sellette d'attelage (5),
une semi-remorque (3) avec un élément de couplage, plus particulièrement avec un pivot d'attelage (4), qui peut être relié avec la sellette d'attelage (5) du véhicule tracteur (2),
**caractérisé en ce que**
la semi-remorque (3) est conçue selon l'une des revendications 1 à 10.

12. Procédé de passage d'une semi-remorque selon l'une des revendications 1 à 10 entre un mode de marche et un mode de chargement et de déchargement, avec les étapes suivantes :
disposition du segment principal (13) du fond (11) dans la position de marche abaissée pour le mode de marche et
levage du segment principal (13) du fond (11) par rapport au segment de couplage (12) vers la position de chargement et de déchargement pour le mode de chargement et de déchargement.
